# EUROPEAN PATENT SPECIFICATION

(11) **EP 3 533 185 B1**
(45) Date of publication and mention of the grant of the patent: **01.03.2023**
(21) Application number: 17871688.2
(22) Date of filing: 02.11.2017
(51) Int. Cl.: G06Q 10/10, H04L 67/52

(54) **CHANNEL RECOMMENDATION SYSTEM AND METHOD**
KANALEMPFEHLUNGSSYSTEM UND VERFAHREN
SYSTÈME ET PROCÉDÉ DE RECOMMANDATION DE CANAL

(30) Priority: 18.11.2016 US 201615356389
(43) Date of publication of application: 04.09.2019
(73) Proprietor: Huawei Technologies Co., Ltd., Longgang District Shenzhen, Guangdong 518129 (CN)
(72) Inventor: SUNDAR, ShivShankar, Plano, TX 75024 (US); KIM, Kwang Nyun, Plano, TX 75024 (US)
(74) Representative: Maiwald GmbH
(86) International application number: PCT/CN2017/109155
(87) International publication number: WO 2018/090838

(56) References cited:
- WO-A1-2012/087680
- CN-A- 102 687 583
- CN-A- 102 906 750
- CN-A- 104 040 575
- US-A1- 2014 074 843
- US-B1- 9 800 525

## Description

### FIELD OF THE INVENTION

The present invention relates to unified communication systems, and more particularly to unified communication systems that allow users to communicate over a plurality of different channels.

### BACKGROUND

Typically, unified communication systems allow users to employ various communication channels [e.g. voice, video, short message service (SMS), instant messaging (IM), etc.] in order to communicate with others. Unfortunately, at any given moment, a user must either guess or use trial and error in order to determine which communication channel is most ideal for communication with another user(s). At best, the aforementioned unified communication systems indicate some level of presence information and/or other limited recommendation schemes that are limited in their effectiveness. Patent document US 2014/074843 A1 describes such a communication system.

### SUMMARY

The invention is defined by the appended claims. Embodiments and examples not covered by the claims are meant to illustrate, and facilitate the understanding of, the claimed invention.

Provided are a channel recommendation system per claim 1, corresponding computer implemented method claim 12 and computer program product claim 14. Dependent claims describe preferred embodiments of the invention.

One or more of the foregoing features of the aforementioned system and/or method may simplify communication between two users by predicting an optimal way to communicate with each other based on a current context and possibly other information (e.g. historical information, etc.). In addition, a bias may be applied in connection with any ultimate channel recommendation, in favor of the target/recipient user of any communication. This may, in turn, result in an increased probability of a positive response (e.g. the target/recipient user answering, etc.) that would otherwise be foregone in systems that lack such capabilities. It should be noted that the aforementioned potential advantages are set forth for illustrative purposes only and should not be construed as limiting in any manner.

### BRIEF DESCRIPTION OF THE DRAWINGS

Figure **1** illustrates a channel recommendation system that provides a bias in favor of a particular user, in accordance with an embodiment.
Figure **2** illustrates a channel recommendation method that provides a bias in favor of a particular user, in accordance with an embodiment.
Figure **3A** illustrates a method for populating a database with communication profiles and current contexts, in accordance with an embodiment.
Figure **3B** illustrates a plurality of exemplary channels that may be recommended, in accordance with an embodiment.
Figure **4** illustrates a method for recommending different channels based on different situations, in accordance with an embodiment.
Figure **5A** illustrates a system for supporting channel recommendations, in accordance with another embodiment.
Figure **5B** illustrates a method for administering channel recommendations, in accordance with another embodiment.
Figures **6A** and **6B** illustrate different methods for user interface interaction in connection with a system that provides channel recommendations, in accordance with another embodiment.
Figure **6C** illustrates a system that provides a bias in favor of a particular user, in accordance with an embodiment.
Figure **7** is a diagram of a network architecture, in accordance with an embodiment.
Figure **8** is a diagram of an exemplary system, in accordance with an embodiment.

### DETAILED DESCRIPTION

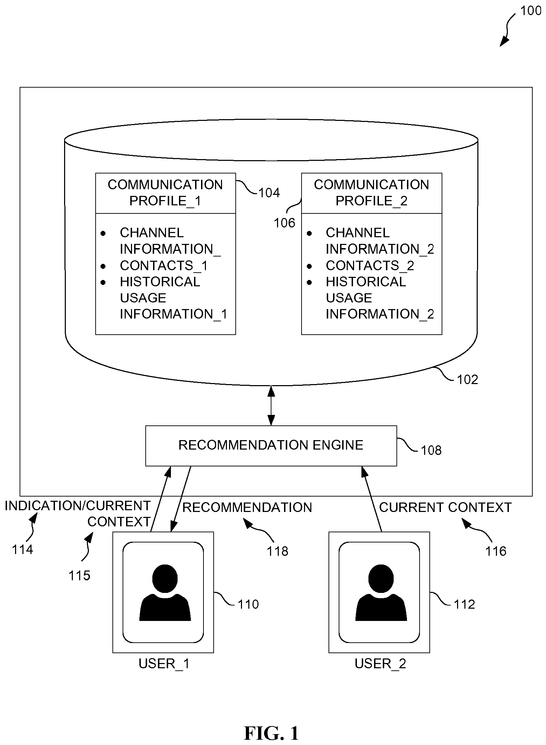

Figure **1** illustrates a channel recommendation system **100** that provides a bias in favor of a particular user, in accordance with an embodiment. As shown, the channel recommendation system **100** includes a non-transitory memory **102** in communication with a recommendation engine **108.** In operation, the non-transitory memory **102** stores instructions (not shown) and a plurality of communication profiles including a first communication profile **104** and a second communication profile **106.** Further, the channel recommendation system **100** serves to provide channel recommendations to a first user (or user device) **110** that desires to communicate with a second user (or user device) **112.** More information will now be set forth regarding the operation and cooperation of the foregoing components.

While the non-transitory memory **102** is shown in Figure **1** to include a single entity in accordance with an embodiment, it should be noted that the non-transitory memory **102** may include separate and/or distributed memory portions each of which may store different portions of the aforementioned instructions and/or communication profiles **104, 106.** For example, in one possible embodiment where the non-transitory memory **102** includes a database and separate memory, the communication profiles **104, 106** may optionally be stored in the database, while the aforementioned instructions may be stored in the separate, more-readily accessed memory [e.g. read-only memory (ROM), random access memory (RAM), etc.].

As shown, the aforementioned communication profiles **104, 106** include, at the very least, channel information associated with a plurality of channels for communication between the first user **110** and the second user **112.** In the present description, the foregoing channel information may include any information that includes, describes, and/or is otherwise derived from a particular channel that a user is capable of using for communication. Further, such channels, in the present description, may each refer to any device, application, connection, and/or any other medium by which communication is possible. To this end, the aforementioned channel information may, in various embodiments, relate to: one or more devices (e.g. computer, vehicle, mobile device such as a phone/tablet, etc.), a type of connection associated with one or more devices [e.g. wireless network, universal serial bus (USB), etc.], one or more protocols associated with one or more connections [e.g. short message service (SMS), instant messaging (IM), Internet message access protocol (IMAP), post office protocol version 3 (POP3), simple mail transfer protocol (SMTP), packet-switched, etc.], an installation of one or more applications (e.g. IM, SMS, e-mail, voice, video, etc.), and/or any other channel information that meets the foregoing definition.

As further shown in Figure **1****,** the communication profiles **104, 106** may also possibly include a plurality of contacts and historical usage information. In the present description, such contacts may include any information associated with other users (e.g. phone number, communication address, name, unique identifier, handle, etc.) that is capable of being used to facilitate communication with one or more of such other users.

Also in the present description, the aforementioned historical usage information may include any information that relates to previous communication behavior of a particular user. Just by way of example, such historical usage information may, in various embodiments, relate to: a frequency with which one or more channels is used (e.g. total count since a predetermined start time, usage instances per month or year, usage instances in a latest predetermined time period, relative frequency, etc.), a location at which one or more channels is used (e.g. home, work, city/state/country, etc.), one or more channels that was last used, a cost associated with use of one or more channels (e.g. cost per minute, relative cost, historical cost, etc.), and/or any other historical usage information that meets the foregoing definition.

With continuing reference to Figure **1****,** the recommendation engine **108** is shown to be proximately situated with respect to the non-transitory memory **102.** Again, other embodiments are contemplated where such components of the system **100** of Figure **1** are remotely situated and communicate over one or more networks. Further, In the present description, the recommendation engine **108** may include any combination of hardware and software that collectively is capable of making channel recommendations. For example, in one embodiment, the recommendation engine **108** may be implemented using one or more processors (not shown) that execute the aforementioned instructions to provide the functionality and operations set forth herein. More information regarding such embodiment will be set forth during the description of subsequent figures.

In use, the communication profiles **104, 106** may be populated in the non-transitory memory **102** by the users **110, 112,** respectively, via their respective devices. Further, an indication that the first user 110 desires to communicate with the second user **112** is received from the first user **110** in operation **114.** Still yet, a first current context of the first user and a second current context of the second user, are determined in operations **115** and **116,** respectively, substantially when the indication is received.

In the present description, such current context may include information relating to a current (e.g. real-time, pseudo-real-time, recent, relevant, etc.) circumstance, situation, aspect, etc. of the relevant user(s). For example, in various embodiments, the current context may relate to: a connectivity of one or more devices (e.g. WiFi, cellular, Bluetooth, a level or lack thereof, etc.), a screen state of one or more devices (e.g. a screen hibernate state, screen on/off, etc.), an audio profile (e.g. mute or sleep option enabled, etc.), a current usage of audio or video (e.g. an indication whether usage is currently occurring, etc.), a location of one or more devices [e.g. global positioning system (GPS) coordinates, postal code, geographic area identifier, work/home mode enabled, etc.], a current time where one or more devices reside (e.g. a time adjusted by current time zone, etc.), a type or content of a message to be communicated (e.g. urgent message, high priority message, message including certain words/phrases, etc.), and/or anything else that meets the above definition.

In various embodiments, any of the foregoing current context information may be detected directly or indirectly, in any desired manner. For example, in one embodiment, a software application may reside on a device of a user which interfaces an operating system (OS) [possibly via an application program interface (API)] for detecting a status of various hardware and/or software in order to glean the foregoing information. Just by way of illustration, in the case of connectivity; a WiFi, cellular, and/or Bluetooth state (e.g. enabled/disabled, connected/disconnected, etc.) in association with a respective modem and/or connectivity manager software may be detected directly or via the aforementioned OS/API. Further, in the case of audio/video usage, an audio/video state (e.g. enabled/disabled, usage amount, etc.) in connection with an audio/video integrated circuit and/or audio/video manager software may be detected directly or via the aforementioned OS/API. Still yet, in the case of audio/video usage, an audio/video state (e.g. enabled/disabled, usage amount, etc.) in connection with an audio/video integrated circuit and/or audio/video manager software may be detected directly or via the aforementioned OS/API. Even still, in the case of location, a GPS and/or GPS manager software may be queried directly or via the aforementioned OS/API. Even still yet, in the case of time, a network may be queried. Further, in the case of messages, one or more messaging application(s) may be queried directly or via the aforementioned OS/API.

To this end, the recommendation engine **108** selects at least one of the channels utilizing: the first communication profile, the second communication profile, the first current context, and/or the second current context. It should be strongly noted that the determination of the channel may utilize some or all of any one or more (and even all) of the foregoing profile/contexts. Strictly as an option, as will be elaborated upon during the description of subsequent embodiments, such selection of the at least one channel is biased in favor of the second communication profile and/or the second current context, in relation to the first communication profile and/or the first current context. In the present description, such bias may refer to any action that results in an increase in a probability, in at least some circumstances, that the second communication profile and/or the second current context will more heavily influence the determination of the channel, as compared to the first communication profile and/or the first current context. Thus, in various possible embodiments, the channel that is recommended may be one that is more suited for the second user **112,** as compared to the first user **110.**

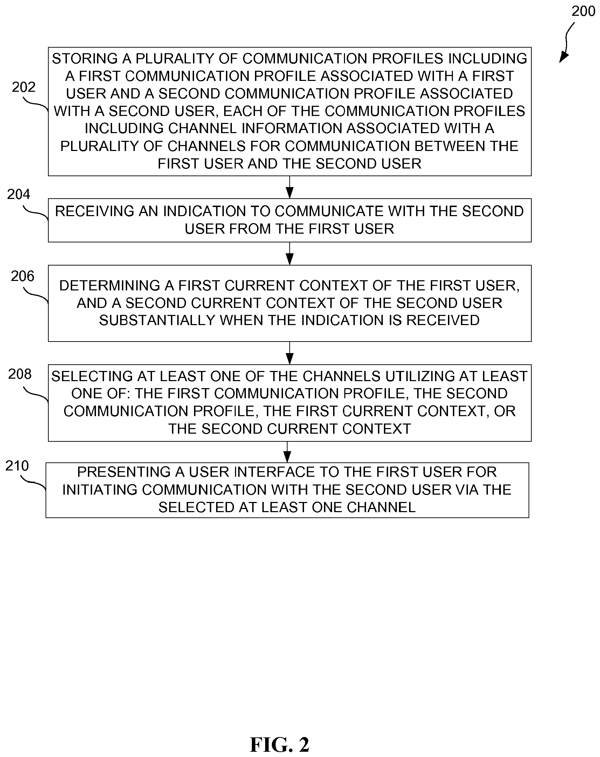

To this end, a user interface is presented to the first user **110** for initiating communication with the second user **112** via the selected at least one channel, as indicated in operation **118.** By this design, the first user **110** may, in one possible embodiment, be provided with a recommended channel in a manner that facilitates communication with the second user **112** and/or increases a probability that the second user **112** will respond to/accept any request to communicate initiated by the first user **110.** This may be accomplished, in some possible embodiments, by ensuring that the communication profile and/or current context of the second user **112** (who is the receiver of any communication request of the first user **110**) is preferentially used and/or accommodated over those of the first user **110,** since it is the second user **112** who ultimately decides whether a communication connection request is actually accepted and formed. More information regarding the aforementioned biasing will be set forth during the description of different embodiments in subsequent figures and, in particular, Figure **2****.**

Figure **2** illustrates a channel recommendation method **200** that provides a bias in favor of a particular user, in accordance with an embodiment. As an option, the channel recommendation method **200** may be implemented in any one or more of the embodiments set forth in any previous and/or subsequent figure(s) and/or description thereof. For example, the channel recommendation method **200** may reflect operation of the channel recommendation system **100** of Figure **1****.** However, it is to be appreciated that the channel recommendation method **200** may be implemented in connection with any desired environment.

As shown, a plurality of communication profiles are stored in operation **202** including a first communication profile (e.g. the first communication profile **104** of Figure **1**) associated with a first user (e.g. the first user **110** of Figure **1**) and a second communication profile (e.g. the second communication profile **106** of Figure **1**) associated with a second user (e.g. the second user **112** of Figure **1**). As mentioned earlier in connection with previously-described embodiments, each of the communication profiles includes channel information associated with a plurality of channels for communication between the first user and the second user, and possibly contacts and/or historical usage information, in any desired memory (e.g. the non-transitory memory **102** of Figure **1**).

It should be noted that, prior to the storage of operation **202,** the communication profiles may be populated in any desired manner. For example, in one embodiment, the communication profiles may be uploaded in connection with a registration process. In another embodiment, the communication profiles may be updated on a periodic, continuous, and/or on-demand basis using any desired push and/or pull communication technique. For example, in yet another embodiment, initial instances of the communication profiles may be uploaded at a first time, and any update to such instances may be periodically or otherwise updated thereafter (e.g. when a change occurs, etc.).

Strictly as an option, sharing of the communication profiles between different users may be prevented for privacy purposes. In one embodiment, this may be accomplished by installing a policy in a system (e.g. the system **100** of Figure **1**) whereby communication profiles are only received and not output (to any user) in any manner. Other embodiments may impose lesser stringent restrictions to accomplish the same objective.

In operation **204,** an indication to communicate with the second user is received from the first user. In the present description, such indication may include any signal that is prompted by the first user indicating a desire to communicate with the second user. For example, in one embodiment, such indication may be in response to a specific request by the first user to communicate with the second user (e.g. by selecting or otherwise identifying a contact of the second user, etc.). In other embodiments, however, the aforementioned indication may result from the first user simply executing (e.g. opening or otherwise accessing, etc.) a communication application. In such embodiment, such communication application may include a unified communication application that supports communication utilizing different channels. For example, such unified communication application may, in various embodiments, include: a single application that, by itself, provides different channel capabilities, or an interface that interacts with different discrete communication applications (each with a different channel capability) for providing a single interface that allows a user to invoke communication using different channel capabilities of different communication applications.

In operation **206,** a first current context of the first user, and a second current context of the second user, are determined substantially when the indication is received. In one embodiment, such current context may be determined in response to the receipt of the indication of operation **204.** In other embodiments, the current context may be determined on-demand or in any other manner, so that such current context may be utilized in a manner that will soon be elaborated upon.

Further, such determination of operation **206** may be carried out in the same or different manner for the first and second users. For example, in one possible embodiment, the first current context may be received with (or coincident with) the indication of operation **204.** Further, the second current context may be received in response to a request that is issued to at least one device of the second user, where such request is prompted by the indication of operation **204.** Again, other embodiments are contemplated, e.g. where the current context are maintained in connection with the communication profiles on a real-time or near real-time basis, for use.

With continuing reference to Figure **2****,** a channel is selected in operation **208** utilizing: the first communication profile, the second communication profile, the first current context, and/or the second current context. In one embodiment, the foregoing determination of operation **208** may be carried out by a recommendation engine (e.g. the recommendation engine **108** of Figure **1****,** etc.). Further, such recommendation engine may retrieve at least a portion of the first communication profile (associated with the first user), and at least a portion of the second communication profile (associated with the first user), so as to have access to the aforementioned information during operation **208.**

To this end, in operation **210,** a user interface is presented to the first user for initiating communication with the second user via the selected at least one channel. Such presentation may result from any signaling that directly or indirectly causes presentation of the channel (using any related information/interface). For example, in one possible embodiment, operation **210** may involve a communication of a signal that includes, describes or is derived from the channel determined in operation **208,** and such signal may be directed to at least one device of the first user, so that a recommendation may be made to the first user.

In one embodiment, the presentation of the channel may simply identify the same, thereby requiring the first user to select the channel before initiating communication therewith. In another embodiment, the presentation of the channel may be accomplished by automatically starting communication (or activating an application associated with (or capable of) the communication) with the second user using the channel by presenting an interface associated with such channel that enables such communication. In still other embodiments, the presentation may take other forms.

As mentioned earlier, the determination of the channel in operation **208** may optionally be biased in favor of the second communication profile and/or the second current context, in relation to the first communication profile and/or the first current context. Further, such bias may be implemented using any action that results in an increase in a probability, in at least some circumstances, that the second communication profile and/or the second current context will more heavily influence the determination of the channel, as compared to the first communication profile and/or the first current context. Thus, in various possible embodiments, the channel that is recommended may be one that is more suited for the second user, as compared to the first user. In one possible embodiment, the foregoing bias may be accomplished by weighting the second communication profile/context more, in relation to the first communication profile/context. More information regarding various possible features that may be employed in connection with such biasing will be set forth during the description of different embodiments shown in subsequent figures.

To this end, in some optional embodiments, one or more of the foregoing features may simplify communication between two users by predicting an optimal way to communicate with each other based on a current context (or status related to the users or devices used by the users) and possibly other information (e.g. historical information, etc.). In addition, a bias may be applied in connection with any ultimate channel recommendation, in favor of the target/recipient user of any communication. This may, in turn, result in an increased probability of a positive response (e.g. the target/recipient user answering, etc.) that would otherwise be foregone in systems that lack such capabilities. It should be noted that the aforementioned potential advantages are set forth for illustrative purposes only and should not be construed as limiting in any manner.

More illustrative information will now be set forth regarding various optional architectures and uses in which the foregoing method may or may not be implemented, per the desires of the user. For example, in one possible embodiment that will be described later, one or more recommended contacts may be determined, for being presented to the first user, before the indication is received in operation **204.** As an option, each of the one or more recommended contacts may include one or more recommended channels. As an additional option, at least one aspect of the one or more recommended contacts may be determined based on at least a portion of one or more of the communication profiles. It should be noted that the following information is set forth for illustrative purposes and should not be construed as limiting in any manner. Any of the following features may be optionally incorporated with or without the other features described.

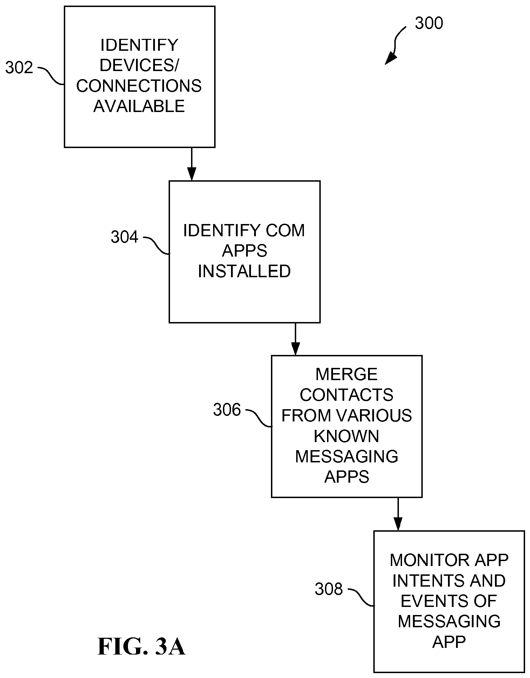

Figure **3A** illustrates a method **300** for populating a database with communication profiles and current contexts, in accordance with an embodiment. As an option, the method **300** may be implemented in connection with any one or more of the embodiments set forth in any previous and/or subsequent figure(s) and/or description thereof. For example, in one embodiment, the method **300** may be used for populating the memory **102** of Figure **1****.** However, it is to be appreciated that the method **300** may be implemented in connection with any desired environment.

As shown in operation **302,** any and all devices (e.g. a phone, a tablet, a laptop, a vehicle, etc.) and connections (e.g. WiFi, cellular, Bluetooth, etc.) associated with a user may be identified. In one embodiment, this may be accomplished during a registration process whereby the user manually identifies the same. In other embodiments, the information collection process may be more automated (e.g. by automatically scanning for devices, relying on cooperation with a device maker who manages a multi-device account for the user, etc.).

Further, in operation **304,** communication applications may be identified which are installed on any one or more of the devices identified in operation **302.** Such communication applications may include, but are not limited to a voice call/message application, an IM application, an SMS application, a video call application, an Internet Protocol (IP)-based communication application, and/or any other application capable of communicating in any desired format. By this design, operations **302-304** serve to collect various channel information.

Still yet, in operation **306,** contacts from one or more contact databases on the aforementioned devices may be retrieved. In one embodiment, such contact databases may each be associated with different ones of the aforementioned communication applications. In such case, such contacts may be merged for use with a unified communication application that incorporates one or more features of the various embodiments described herein. In other embodiments, a central/primary contact database may be queried for such contacts in addition to/instead of querying the foregoing application-specific contact database(s).

With continuing reference to Figure **3A****,** the abovementioned communication applications may be monitored, along with any other applications/operating system (OS), so as to gather historical usage information associated with communication of the user. For example, in various possible embodiments, each communication event may be counted and monitored along with any aspects associated therewith. For each communication event, a record may be compiled that details channel information including, but not limited to which device, application, connection, etc. was used. Further, a location and a time (e.g. along with time zone, etc.) may be logged for each communication event. Even still, any other perceptible occurrence may be logged as well. Just by way of example, it may be determined whether the device of the user was in a certain state (e.g. silent mode, nighttime mode, do not disturb mode, low power mode, etc.) and/or there was current device usage (e.g. audio and/or video consumption, etc.) when a communication event is initiated, as well as a reaction by the user (e.g. user does not answer, user elects a different mode of communication, etc.).

By collecting all of such information, different intents/preferences of such user may be inferred for different circumstances, so that a more suitable channel recommendation may be provided to another user who attempts to contact such user in the future under similar circumstances. In one embodiment, such information may be used for generating logic and/or rules that dictates channel recommendation and/or any other actions in the future. More information regarding various possible features that may be employed in connection with such channel recommendation will be set forth during the description of different embodiments shown in subsequent figures.

In any case, any or all of the information collected in operations **302-306** may be uploaded to a networked non-transitory memory (e.g. the memory **102** of Figure **1**) which may, in one embodiment, take the form of a central database. To this end, such information may be available for use when determining a channel to recommend to a user who desires to communicate with another user. Further, the foregoing information may be continuously, periodically, or otherwise (upon a change) updated, so that the non-transitory memory is up-to-date. For example, any addition/removal/change in connection with a channel, a contact, and/or usage may be tracked and logged.

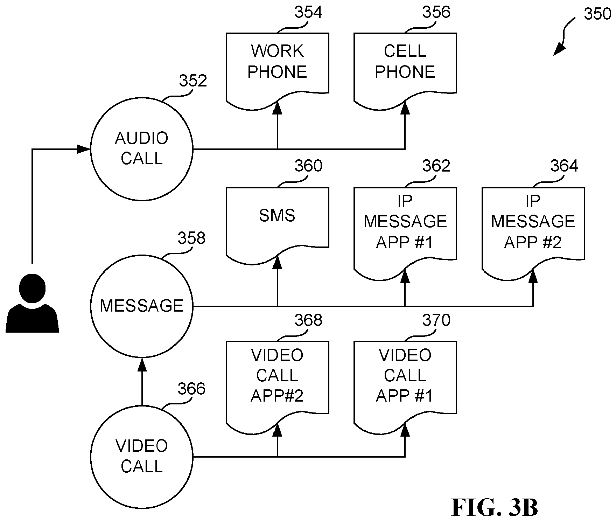

Figure **3B** illustrates a plurality of exemplary channels **350** that may be recommended, in accordance with an embodiment. As an option, the exemplary channels **350** may be implemented in connection with any one or more of the embodiments set forth in any previous and/or subsequent figure(s) and/or description thereof. However, it is to be appreciated that the exemplary channels **350** may be implemented in connection with any desired environment.

As shown, different type of communication channels include an audio call channel type **352,** a textual messaging channel type **358,** and a video call channel type **366.** Further, the audio call channel type **352** (or any other type, for that matter) may involve any device including, but not limited to a work phone **354** and a cellular phone **356.** Still yet, the textual messaging channel type **358** may involve a SMS messaging application/protocol **360,** a first IP-based messaging application/protocol **362,** and a second IP-based messaging application/protocol **364.** Even still, the video call channel type **366** may include a first video call application/protocol **368** and a second video call application/protocol **370.**

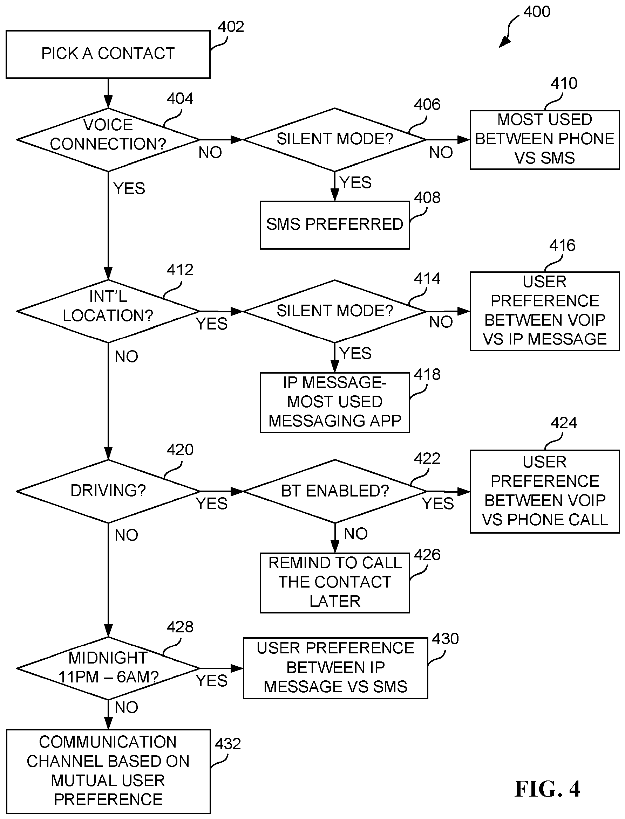

Figure **4** illustrates a method **400** for recommending different channels based on different situations, in accordance with an embodiment. As an option, the method **400** may be implemented in connection with any one or more of the embodiments set forth in any previous and/or subsequent figure(s) and/or description thereof. For example, the method **400** may incorporate any of the features of the method **200** of Figure **2** and may further be carried out in the system **100** of Figure **1****,** using the information collected per the method **300** of Figure **3A****.** However, it is to be appreciated that the method **400** may be implemented in connection with any desired environment.

As shown, in operation **402,** a selection of a target contact is detected. Such target contact selection may be detected in connection with a unified communication application/platform and/or a specific communication application. Further, such target contact may one with whom a user desires to communicate. In any case, decisions **404-428** (and any others) are made based on a current context of the user and/or contact (e.g. see operation **206** of Figure **2**), and various channels are determined for recommendation purposes based on such current context and channel information/historical usage information associated with the user and/or contact, as will now be described.

Specifically, in decision **404,** it is determined whether a connection is available or if a connection is of sufficient quality to support a voice call or any real-time communication. If not, it is then determined in decision **406** whether the device of the target contact is operating in a silent mode. If so, an SMS channel may be indicated as a preferred channel for the target contact, per operation **408.** On the other hand, if it is determined in decision **406** that the device of the target contact is not operating in the silent mode, the preferred channel (e.g. phone call vs. SMS) for the target contact may be that which is most used, as indicated by operation **410.** By this design, the preferred channel for the target contact may be driven by a current connection status, as well as the enablement of a silent mode.

Moving now to decision **412,** it is determined whether a current location of the target contact indicates that the target contact device is internationally located (e.g. outside a home cellular network, etc.). If so, it is then determined in decision **414** whether the device of the target contact is operating in a silent mode. If so, a most used IP-based messaging application may be indicated as a preferred channel for the target contact, per operation **418.** On the other hand, if it is determined in decision **414** that the device of the target contact is not operating in the silent mode, the channel preferred for the target contact may be a voice over IP (VoIP) messaging application or other IP-based messaging application that is indicated to be most preferred by the target contact, as indicated by operation **416.** By this design, the preferred channel for the target contact may be driven by their location, to avoid costly communications that can result from use of a roaming network.

With reference now to decision **420,** it is determined whether a movement of the target contact (or some other indicator such as a connection with a vehicle) indicates that the target contact is driving. If so, it is then determined in decision **414** whether the device of the target contact is Bluetooth-enabled. If so, the channel preferred for the target contact may be a VoIP messaging application or voice call application that is indicated to be most preferred by the target contact, as indicated by operation **424.** On the other hand, if it is determined in decision **422** that the device of the target contact is not Bluetooth-enabled, a reminder may be sent to the user in operation **426,** for contacting the target contact at a later time. By this design, the preferred channel for the target contact may be governed by the fact that they are driving and whether a safe Bluetooth-enabled channel is available for use or not, in order to promote safety.

Moving now to decision **428,** it is determined whether a current time at a location of the device of the target contact is within a certain range that is not suitable for real-time communication (e.g. 11P-6A). If so, in operation **430,** the channel to be indicated as being preferred by the target contact may be an IP-based messaging application or SMS application (depending the preferences of the target contact). On the other hand, if it is determined that the current time at the location of the device of the target contact is suitable for real-time communication, the channel deemed preferred by the target contact in operation **432** may be based on a mutual preference among the user and the target contact. For example, if the user prefers voice calls first and video calls second, and the target contact prefers email first and voice calls second, a voice call will result as the recommended channel in operation **432.**

As indicated above, the various operations of the method **400** of Figure **4** primarily indicate which channel is preferred by the target contact. By taking into account the communication profile information/current context of the target contact with a preference over (or even to the exclusion of) the communication profile information/current context of the user, the channel recommendation process may be biased in favor of the target user. In various embodiments, this may increase the chances of incurring a response from the target contact and improving the overall experience of the user.

In other embodiments, such bias may be accomplished in other ways. For example, the method **400** of Figure **4** may be carried out for both the user and the target contact such that each process results in a preferred channel for both, whereby both channel preferences may be taken into consideration when making a channel recommendation. Further, in such embodiment, a weighting may be applied to both the user preferred channel (less so) and the target contact preferred channel (more so), so as to bias an end result channel recommendation in favor of the target contact. For example, in one possible embodiment where the user preferred channel and the target contact preferred channel are different, the target contact preferred channel may be weighted by a predetermined or configurable weight amount such that other factors (e.g. profile/context factors) that would otherwise favor selection of the user preferred channel would need to be sufficient to outweigh/exceed such weight amount before overriding a default selection of the target contact preferred channel. In still other embodiments, such weighting may be foregone in favor of a policy of selecting the target contact preferred channel (as the recommended channel) in certain situations (e.g. when there is a tie, etc.).

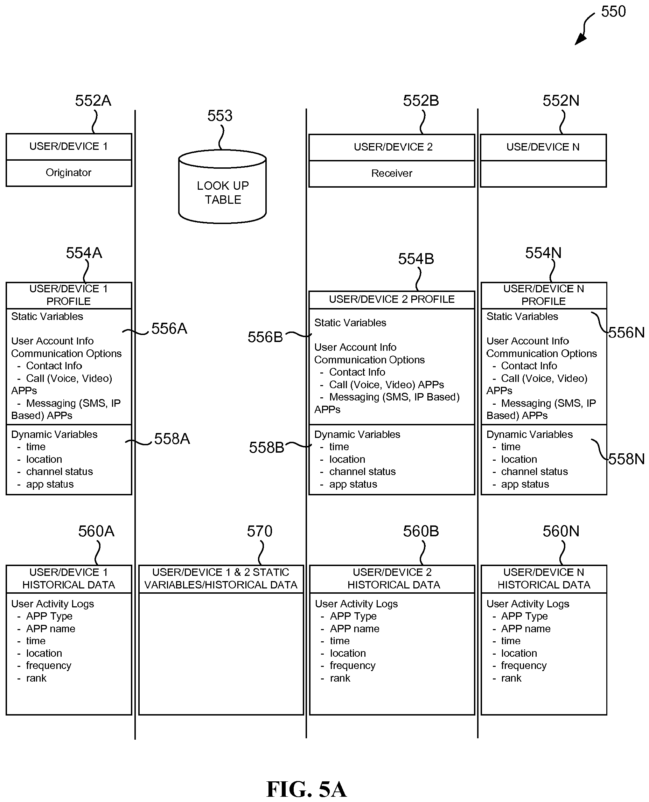

Figure **5A** illustrates a system **550** for supporting channel recommendations, in accordance with another embodiment. As an option, the system **550** may be implemented in connection with any one or more of the embodiments set forth in any previous and/or subsequent figure(s) and/or description thereof. For example, the system **550** may be implemented in the system **100** of Figure **1****.** However, it is to be appreciated that the system **550** may be implemented in connection with any desired environment.

As shown, the system **550** includes a plurality of data structures that store information relating to a plurality of users/devices including a first user/device **552A** who/that, in the present embodiment, is an originator of a communication, a second user device **552B** who/that is a receiver of the communication, and a plurality of other users/devices **552N.** Still yet, the system **550** includes at least one faster access memory **553** in addition to database memory that are situated on a network (i.e. in the cloud), for supporting channel recommendations.

As shown, the system **550** receives and stores information for each of the users/devices **552A, 552B, 552N** in the form of user/device profiles **554A, 554B, 554N** that each include static variables (or attributes) **556A, 556B, 556N** and dynamic variables (or attributes) **558A, 558B, 558N.** Examples of the static variables **556A, 556B, 556N** may include, but are not limited to user account information and communication options (e.g. contacts, calling applications, messaging applications, etc.). Further, examples of the dynamic variables **558A, 558B, 558N** may include, but are not limited to time, location, channel status, application status, etc. Thus, the dynamic variables **558A, 558B, 558N** are those that are subject to more change, as compared to the static variables **556A, 556B, 556N.**

With continuing reference to Figure **5A****,** the system **550** also collects additional data for each of the users **552A, 552B, 552N** in the form of historical data **560A, 560B, 560N** that reflects user activity and is stored in corresponding logs. Examples of such historical data **560A, 560B, 560N** may include, but is not limited to an application type, an application name, a time, a location, a frequency, a rank, etc. While shown to be separate, it should be noted that the historical data may or may not be part of the relevant user profile.

In use, the user profiles **554A, 554B, 554N** and the historical data **560A, 560B, 560N** may be stored in a centralized (or distributed) database for providing access thereto when making channel recommendations. Further, for reasons that will soon become apparent, a portion of the foregoing information/data **570** including any or all static variables **556A, 556B** and historical data **560A, 560B** that is relevant to a particular communication between two or more of the users **552A, 552B** may be stored in the faster access memory **553** which, in turn, may include random access memory (RAM), etc. Further, the aforementioned information/data portion **570** may be stored in the form of a look up table (LUT) or any other desired data structure that facilitates fast access to the same. More information will now be set forth regarding one possible method that may employ the system **550** for supporting channel recommendations.

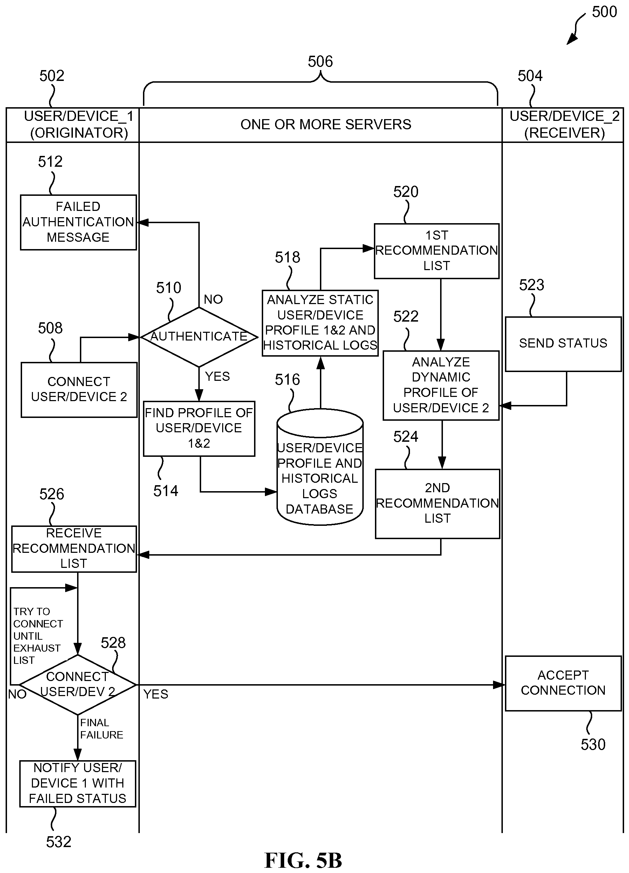

Figure **5B** illustrates a method **500** for administering channel recommendations, in accordance with another embodiment. As an option, the method **500** may be implemented in connection with any one or more of the embodiments set forth in any previous and/or subsequent figure(s) and/or description thereof. For example, the method **500** may incorporate any of the features of the method **200** of Figure **2** and may further be carried out in the system **100** of Figure **1****,** using the information collected per the method **300** of Figure **3A** and available via the system **550** of Figure **5A****.** However, it is to be appreciated that the method **500** may be implemented in connection with any desired environment.

As shown, the method **500** involves a first user/device **502** and a second user/device **504** whereby the first user/device **502** is capable of initiating various processes at one or more servers **506** (in the cloud) in order to effect a channel recommendation based on various communication profile information as well as a current context. In operation **508,** the first user/device **502** initiates communication with the second user/device **504.** In response, the server(s) **506** (e.g. the system **100** of Figure **1****,** etc.) authenticates the first user/device **502** in decision **510,** after which a failed authentication message is sent in operation **512** in the event of authentication failure.

On the other hand, if the authentication is a success per decision **510,** a communication profile for the first user/device **502** and the second user/device **504** is located in memory **516** (e.g. the memory **102** of Figure **1****,** the system **550** of Figure **5A****,** etc.) which may include a centralized and/or distributed database, in addition to faster access memory (e.g. the faster access memory **553** of Figure **5A**). See operation **514.** In use, such access may be accomplished by a command issued in operation **508** including contact information (e.g. phone number, address, etc.) of the users/devices **502, 504** so that such contact information may serve as a key in a profile database **516** for retrieval of the communication profile/historical data of the first user/device **502** and the second user/device **504.**

Further, in one possible embodiment, certain portions of the communication profile/historical data such as static variables and historical data (e.g. the static variables **556A, 556B** and the historical data **560A, 560B** of Figure **5A****,** etc.) may be stored in the faster access memory possibly in the form of a LUT, so that such information may be accessed in real-time during subsequent analysis. Specifically, in one possible embodiment, the collection and calculation of the static variables and historical data may be conducted using background processes (when possible) and any results stored in the faster access memory for faster access during use in operation **518.**

In particular, an analysis ensues in operation **518** for determining a plurality of recommendation channel options to be included in a first recommendation list in operation **520.** Further, in operation **522,** such first recommendation list is the subject of further analysis utilizing dynamic variables (e.g. the dynamic variables **558A, 558B** of Figure **5A**) received from the second user/device **504** in operation **523.** Specifically, the dynamic variables may be used to select one or more options from the first recommendation list, thus creating a second recommendation list in operation **524.** By this design, a tiered recommendation list parsing process is provided whereby the static variables and historical data are used to generate the first recommendation list, and the dynamic variables are used to refine such first recommendation list, resulting in the second recommendation list.

To this end, the second recommendation list is sent to and thus received by the first user/device **502** in operation **526.** If the first user/device **502** indicates that a connection should be made (per decision **528**) by either selecting one of the options of the second recommendation list (or simply using the highest-ranked option by default, in response to a connection command), a connection may be requested for acceptance per operation **530.** If the second user/device **504** does not accept the connection request, a failure notification is issued in operation **532,** while possibly offering the first user/device **502** with an option to retry a connection.

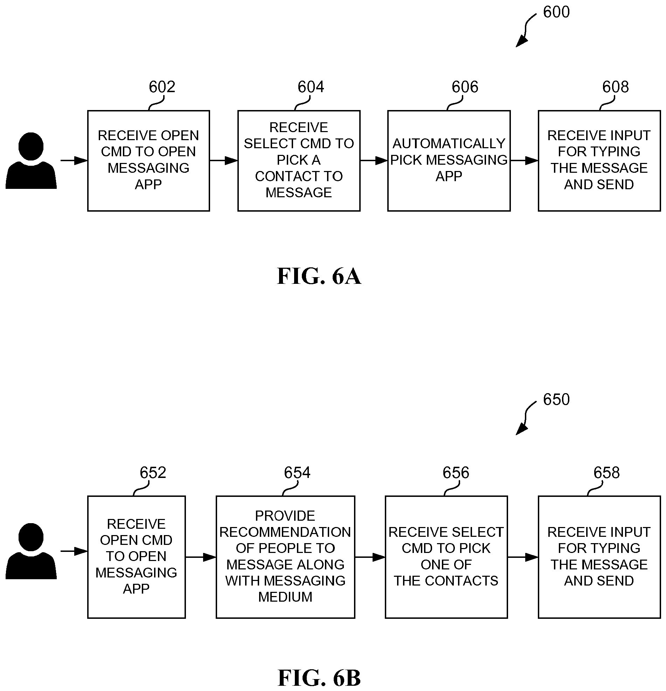

Figures **6A** and **6B** illustrate different methods **600, 650** for user interface interaction in connection with a system that provides channel recommendations, in accordance with another embodiment. As shown in Figure **6A****,** such method **600** starts with a device receiving an open command initiated by input of a user and, in response, opening a messaging application in operation **602.** Further, the device receives a select command initiated by input of the user and, in response, picks a target contact with whom the user desires communication, as indicated in operation **604.** In response, the device receives an indication of a recommended channel (e.g. a messaging application, etc.) and automatically selects the same in operation **606.** By this design, the device may immediately receive user input from the user for entering a message in operation **608.**

As shown in Figure **6B****,** such method **650** starts with a device receiving an open command initiated by input of a user and, in response, opening a messaging application in operation **652.** Further, the device provides a recommendation of people/devices to communicate with, along with a recommended channel. See operation **654.** In one embodiment, such recommended people/devices may be those which meet criteria in terms of a frequency with which the device (administering the method **650**) communicates with such people/devices and/or whether the device (administering the method **650**) communicated with such people/devices recently. Further, the recommended channels displayed in operation **654** may be determined using any of the techniques described therein (e.g. via the method **200** of Figure **2** using the system **100** of Figure **1****,** etc.), but for multiple contacts. Next, in operation **656,** the device receives a select command initiated by input of the user and, in response, selects a target contact from those of the recommended list and immediately starts creating a message in operation **658** in response to receiving user input from the user.

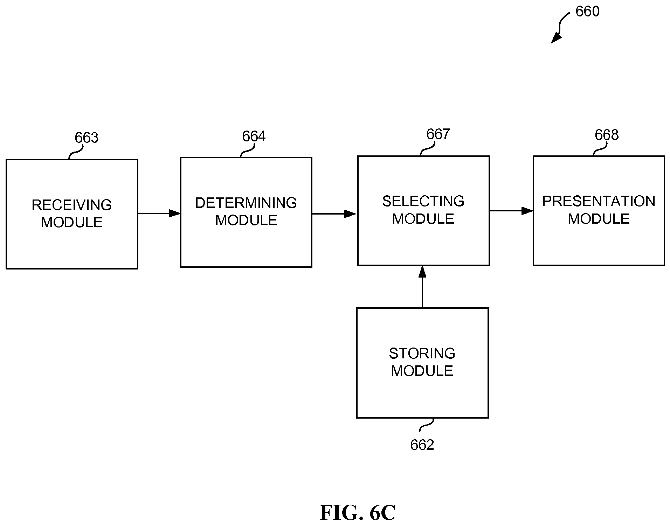

Figure **6C** illustrates a system **660** that provides a bias in favor of a particular user, in accordance with an embodiment. As an option, the system **660** may be implemented with one or more features of any one or more of the embodiments set forth in any previous and/or subsequent figure(s) and/or the description thereof. However, it is to be appreciated that the system **660** may be implemented in connection with any desired environment.

As shown, a storing means in the form of a storing module **662** is provided for storing communication profiles and channel information (associated with a plurality of channels), in accordance with operation **202** of Figure **2****.** In various embodiments, the storing module **662** may include, but is not limited to the memory **102** of Figure **1****,** memory (to be described later), and/or any other circuitry capable of the aforementioned functionality.

Also included is a receiving means in the form of a receiving module **663** for receiving an indication to communicate with the second user from the first user, in accordance with operation **204** of Figure **2****.** In various embodiments, the receiving module **663** may include, but is not limited to the recommendation engine **108** of Figure **1** (or portion thereof), at least one processor (to be described later) or portion thereof and any software controlling the same, and/or any other circuitry capable of the aforementioned functionality.

A determining means is also provided in the form of a determining module **664** in communication with the receiving module **663,** for determining a first current context of the first user and a second current context of the second user substantially when the indication is received, in accordance with operation **206** of Figure **2****.** In various embodiments, the determining module **664** may include, but is not limited to the recommendation engine **108** of Figure **1** (or portion thereof), at least one processor (to be described later) or portion thereof and any software controlling the same, and/or any other circuitry capable of the aforementioned functionality.

Further included is a selecting means in the form of a selecting module **667** in communication with the determining module **664** and the storing module **662,** for selecting at least one of the channels utilizing: a first communication profile, a second communication profile, the first current context, and/or the second current context, in accordance with operation **208** of Figure **2****.** In various embodiments, the selecting module **667** may include, but is not limited to the recommendation engine **108** of Figure **1** (or portion thereof), at least one processor (to be described later) or portion thereof and any software controlling the same, and/or any other circuitry capable of the aforementioned functionality.

Still yet, a presentation means is provided in the form of a presentation module **668** in communication with the selecting module **667,** for presenting a user interface to the first user for initiating communication with the second user via the selected at least one channel, in accordance with operation **210** of Figure **2****.** In various embodiments, the presentation module **668** may include, but is not limited to the recommendation engine **108** and/or user device of the first user **110** of Figure **1****,** at least one processor (to be described later) or portion thereof and any software controlling the same, and/or any other circuitry capable of the aforementioned functionality.

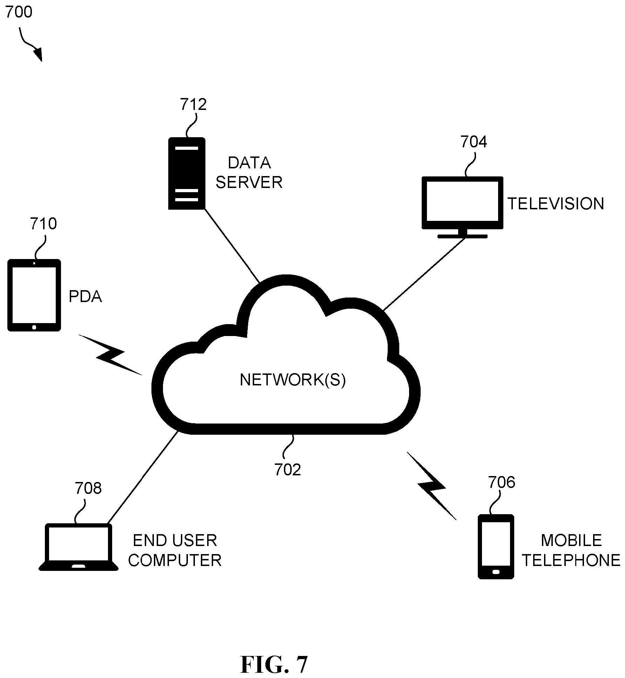

Figure **7** is a diagram of a network architecture **700,** in accordance with an embodiment. As shown, at least one network **702** is provided. In various embodiments, any one or more components/features set forth during the description of any previous figure(s) may be implemented in connection with any one or more of the components of the at least one network **702.**

In the context of the present network architecture **700,** the network **702** may take any form including, but not limited to a telecommunications network, a local area network (LAN), a wireless network, a wide area network (WAN) such as the Internet, peer-to-peer network, cable network, etc. While only one network is shown, it should be understood that two or more similar or different networks **702** may be provided.

Coupled to the network **702** is a plurality of devices. For example, a server computer **712** and a computer **708** may be coupled to the network **702** for communication purposes. Such computer **708** may include a desktop computer, lap-top computer, and/or any other type of logic. Still yet, various other devices may be coupled to the network **702** including a personal digital assistant (PDA) device **710,** a mobile phone device **706,** a television **704,** etc.

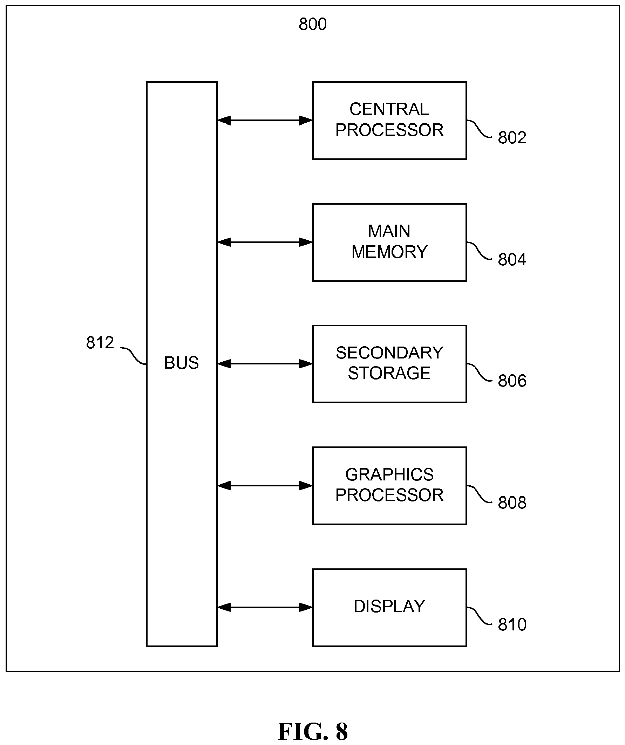

Figure **8** is a diagram of an exemplary system **800,** in accordance with an embodiment. As an option, the system **800** may be implemented in connection with any of the devices of the network architecture **700** of Figure **7****.** However, it is to be appreciated that the system **800** may be implemented in any desired environment.

As shown, a system **800** is provided including at least one processor **802** which is connected to a bus **812.** The system **800** also includes memory **804** [e.g., hard disk drive, solid state drive, random access memory (RAM), etc.]. The memory **804** may include one or more memory components, and may even include different types of memory. The system **800** also includes a display **810** in the form of a touchscreen, separate display, or the like. Further included is a graphics processor **808** coupled to the display **810.**

The system **800** may also include a secondary storage **806.** The secondary storage **806** includes, for example, a hard disk drive and/or a removable storage drive, representing a floppy disk drive, a magnetic tape drive, a compact disk drive, etc. The removable storage drive reads from and/or writes to a removable storage unit in a well-known manner.

Computer programs, or computer control logic algorithms, may be stored in the memory **804,** the secondary storage **806,** and/or any other memory, for that matter. Such computer programs, when executed, enable the system **800** to perform various functions (as set forth above, for example). Memory **804,** secondary storage **806** and/or any other storage comprise non-transitory computer-readable media.

It is noted that the techniques described herein, in an aspect, are embodied in executable instructions stored in a computer readable medium for use by or in connection with an instruction execution machine, apparatus, or device, such as a computer-based or processor-containing machine, apparatus, or device. It will be appreciated by those skilled in the art that for some embodiments, other types of computer readable media are included which may store data that is accessible by a computer, such as magnetic cassettes, flash memory cards, digital video disks, Bernoulli cartridges, random access memory (RAM), read-only memory (ROM), or the like.

As used here, a "computer-readable medium" includes one or more of any suitable media for storing the executable instructions of a computer program such that the instruction execution machine, system, apparatus, or device may read (or fetch) the instructions from the computer readable medium and execute the instructions for carrying out the described methods. Suitable storage formats include one or more of an electronic, magnetic, optical, and electromagnetic format. A non-exhaustive list of conventional exemplary computer readable medium includes: a portable computer diskette; a RAM; a ROM; an erasable programmable read only memory (EPROM or flash memory); optical storage devices, including a portable compact disc (CD), a portable digital video disc (DVD), a high definition DVD (HD-DVD^{™}), a BLU-RAY disc; or the like.

It should be understood that the arrangement of components illustrated in the Figures described are exemplary and that other arrangements are possible. It should also be understood that the various system components defined by the claims, described below, and illustrated in the various block diagrams represent logical components in some systems configured according to the subject matter disclosed herein.

For example, one or more of these system components (and means) may be realized, in whole or in part, by at least some of the components illustrated in the arrangements illustrated in the described Figures. In addition, while at least one of these components are implemented at least partially as an electronic hardware component, and therefore constitutes a machine, the other components may be implemented in software that when included in an execution environment constitutes a machine, hardware, or a combination of software and hardware.

More particularly, at least one component defined by the claims is implemented at least partially as an electronic hardware component, such as an instruction execution machine (e.g., a processor-based or processor-containing machine) and/or as specialized circuits or circuitry (e.g., discrete logic gates interconnected to perform a specialized function). Other components may be implemented in software, hardware, or a combination of software and hardware. Moreover, some or all of these other components may be combined, some may be omitted altogether, and additional components may be added while still achieving the functionality described herein. Thus, the subject matter described herein may be embodied in many different variations, and all such variations are contemplated to be within the scope of what is claimed.

In the description above, the subject matter is described with reference to acts and symbolic representations of operations that are performed by one or more devices, unless indicated otherwise. As such, it will be understood that such acts and operations, which are at times referred to as being computer-executed, include the manipulation by the processor of data in a structured form. This manipulation transforms the data or maintains it at locations in the memory system of the computer, which reconfigures or otherwise alters the operation of the device in a manner well understood by those skilled in the art. The data is maintained at physical locations of the memory as data structures that have particular properties defined by the format of the data. However, while the subject matter is being described in the foregoing context, it is not meant to be limiting as those of skill in the art will appreciate that various of the acts and operations described hereinafter may also be implemented in hardware.

To facilitate an understanding of the subject matter described herein, many aspects are described in terms of sequences of actions. At least one of these aspects defined by the claims is performed by an electronic hardware component. For example, it will be recognized that the various actions may be performed by specialized circuits or circuitry, by program instructions being executed by one or more processors, or by a combination of both. The description herein of any sequence of actions is not intended to imply that the specific order described for performing that sequence must be followed. All methods described herein may be performed in any suitable order unless otherwise indicated herein or otherwise clearly contradicted by context.

The use of the terms "a" and "an" and "the" and similar referents in the context of describing the subject matter (particularly in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. Furthermore, the foregoing description is for the purpose of illustration only, and not for the purpose of limitation, as the scope of protection sought is defined by the claims as set forth hereinafter together with any equivalents thereof entitled to. The use of any and all examples, or exemplary language (e.g., "such as") provided herein, is intended merely to better illustrate the subject matter and does not pose a limitation on the scope of the subject matter unless otherwise claimed. The use of the term "based on" and other like phrases indicating a condition for bringing about a result, both in the claims and in the written description, is not intended to foreclose any other conditions that bring about that result. No language in the specification should be construed as indicating any non-claimed element as essential to the practice of the invention as claimed.

## Claims

1. A system (100), comprising:
a non-transitory memory (102) comprising instructions and a plurality of communication profiles including a first communication profile (104) associated with a first user (110) and a second communication profile (106) associated with a second user (112), each of the communication profiles including channel information associated with a plurality of channels for communication between the first user and the second user; and
one or more processors (108) in communication with the memory, wherein the one or more processors execute the instructions to:
receive an indication (114) to communicate with the second user from the first user;
determine a first current context (115) of the first user, and a second current context (116) of the second user substantially when the indication is received, wherein at least one of the first current context or the second current context relates to at least one of: a connectivity of one or more devices, a screen state of one or more devices, an audio profile, a current usage of audio or video, a location of one or more devices, a current time where one or more devices reside, or a type or content of a message to be communicated;
select at least one of the channels utilizing at least one of: the first communication profile, the second communication profile, the first current context, or the second current context, wherein the selection is biased in favor of the second communication profile and/or the second current context associated with the second user, in relation to the first communication profile and/or the first current context associated with the first user; and
present a user interface to the first user for initiating communication with the second user via the selected at least one channel utilizing at least one of:
(i) in response to determining that a connection between the first user and the second user is unavailable or the connection is of insufficient quality to support a voice call or any real-time communication, and to determining that a device of the second user is operating in a silent mode, presenting the user interface to the first user for initiating communication with the second user via a short message service, SMS, channel;
(ii) in response to determining that a current location of the second user is outside a home cellular network, and to determining that a device of the second user is operating in a silent mode, presenting the user interface to the first user for initiating communication with the second user via a most used IP-based messaging application;
(iii) in response to determining that the second user is driving, and to determining that a device of the target contact is not Bluetooth-enabled, sending a reminder to the first user for contacting the second user at a later time; or
(iv) in response to determining that a current time at a location of a device of the second user is within a certain range that is not suitable for real-time communication, presenting the user interface to the first user for initiating communication with the second user via an IP-based messaging application or SMS application.

2. The system of claim 1, wherein the channel includes at least one of: one or more devices, one or more connections, one or more protocols, or one or more applications.

3. The system of claim 1, wherein the channel information relates to at least one of: one or more devices, a type of connection associated with one or more devices, one or more protocols associated with one or more connections, or an installation of one or more applications.

4. The system of claim 1, wherein each of the communication profiles includes historical usage information.

5. The system of claim 4, wherein the historical usage information relates to at least one of: a frequency with which one or more channels is used, a location at which one or more channels is used, one or more channels that was last used, or a cost associated with use of one or more channels.

6. The system of claim 1, wherein each of the communication profiles includes a plurality of contacts.

7. The system of claim 1, wherein the system is configured for preventing the communication profiles from being shared between different users.

8. The system of claim 1, wherein the one or more processors execute the instructions to determine one or more recommended contacts to be presented to the first user, before the indication is received.

9. The system of claim 8, wherein each of the one or more recommended contacts includes one or more recommended channels.

10. The system of claim 8, wherein at least one aspect of the one or more recommended contacts is determined based on at least a portion of one or more of the communication profiles.

11. The system of claim 1, wherein the system is configured such that the selection of the at least one channel is biased by weighting at least one of the second communication profile or the second current context more, in relation to at least one of the first communication profile or the first current context.

12. A computer-implemented method (200), comprising:
storing (202) a plurality of communication profiles including a first communication profile associated with a first user and a second communication profile associated with a second user, each of the communication profiles including channel information associated with a plurality of channels for communication between the first user and the second user;
receiving (204) an indication to communicate with the second user from the first user;
determining (206) a first current context of the first user, and a second current context of the second user substantially when the indication is received, wherein at least one of the first current context or the second current context relates to at least one of: a connectivity of one or more devices, a screen state of one or more devices, an audio profile, a current usage of audio or video, a location of one or more devices, a current time where one or more devices reside, or a type or content of a message to be communicated;
selecting (208) at least one of the channels utilizing at least one of: the first communication profile, the second communication profile, the first current context, or the second current context, wherein the selection is biased in favor of the second communication profile and/or the second current context associated with the second user, in relation to the first communication profile and/or the first current context associated with the first user; and
presenting (210) a user interface to the first user for initiating communication with the second user via the selected at least one channel utilizing at least one of:
(i) in response to determining that a connection between the first user and the second user is unavailable or the connection is of insufficient quality to support a voice call or any real-time communication, and to determining that a device of the second user is operating in a silent mode, presenting (408) the user interface to the first user for initiating communication with the second user via a short message service, SMS, channel;
(ii) in response to determining that a current location of the second user is outside a home cellular network, and to determining that a device of the second user is operating in a silent mode, presenting (418) the user interface to the first user for initiating communication with the second user via a most used IP-based messaging application;
(iii) in response to determining that the second user is driving, and to determining that a device of the target contact is Bluetooth-enabled, sending (426) a reminder to the first user for contacting the second user at a later time; or
(iv) in response to determining that a current time at a location of the device of the second user is within a certain range that is not suitable for real-time communication, presenting (430) the user interface to the first user for initiating communication with the second user via an IP-based messaging application or SMS application.

13. The method of claim 12, wherein the channel includes at least one of: one or more devices, one or more connections, one or more protocols, or one or more applications.

14. A computer program product comprising computer executable instructions stored on a non-transitory computer readable medium that when executed by a processor instruct the processor to perform the method according to claim 12 or 13.

## Patentansprüche

1. System (100), umfassend:
einen nicht flüchtigen Speicher (102), umfassend Anweisungen und eine Vielzahl von Kommunikationsprofilen, die ein erstes Kommunikationsprofil (104), das mit einem ersten Benutzer (110) verknüpft ist, und ein zweites Kommunikationsprofil (106), das mit einem zweiten Benutzer (112) verknüpft ist, beinhaltet, wobei jedes der Kommunikationsprofile Kanalinformationen, die mit einer Vielzahl von Kanälen für eine Kommunikation zwischen dem ersten Benutzer und dem zweiten Benutzer verknüpft sind; beinhaltet und
einen oder mehrere Prozessoren (108) in Kommunikation mit dem Speicher, wobei der eine oder die mehreren Prozessoren die Anweisungen ausführen zum:
Empfangen einer Hinweismeldung (114), um mit dem zweiten Benutzer zu kommunizieren, von dem ersten Benutzer;
Bestimmen eines ersten aktuellen Kontexts (115) des ersten Benutzers und eines zweiten aktuellen Kontexts (116) des zweiten Benutzers im Wesentlichen, wenn die Hinweismeldung empfangen wird, wobei mindestens einer von dem ersten aktuellen Kontext oder dem zweiten aktuellen Kontext mindestens eines betrifft von: einer Konnektivität einer oder mehrerer Vorrichtungen, einem Bildschirmzustand einer oder mehrerer Vorrichtungen, einem Audioprofil, einer aktuellen Verwendung von Audio oder Video, einem Standort einer oder mehrerer Vorrichtungen, einer aktuellen Zeit, an der sich eine oder mehrere Vorrichtungen aufhalten, oder einer Art oder einem Inhalt einer zu kommunizierenden Nachricht;
Auswählen mindestens eines der Kanäle unter Nutzung von mindestens einem von: dem ersten Kommunikationsprofil, dem zweiten Kommunikationsprofil, dem ersten aktuellen Kontext oder dem zweiten aktuellen Kontext, wobei die Auswahl zugunsten des zweiten Kommunikationsprofils und/oder des zweiten aktuellen Kontexts, die mit dem zweiten Benutzer verknüpft sind, in Bezug auf das erste Kommunikationsprofil und/oder den ersten aktuellen Kontext, die mit dem ersten Benutzer verknüpft sind, beeinflusst ist; und
Präsentieren, dem ersten Benutzer, einer Benutzeroberfläche zum Einleiten der Kommunikation mit dem zweiten Benutzer über den ausgewählten mindestens einen Kanal unter Nutzung von mindestens einem von:
(i) als Reaktion auf das Bestimmen, dass eine Verbindung zwischen dem ersten Benutzer und dem zweiten Benutzer nicht verfügbar ist, oder die Verbindung von unzureichender Qualität ist, um einen Sprachanruf oder eine beliebige Echtzeitkommunikation zu unterstützen, und auf das Bestimmen, dass eine Vorrichtung des zweiten Benutzers in einem Lautlos-Modus arbeitet, Präsentieren, dem ersten Benutzer, der Benutzeroberfläche zum Einleiten der Kommunikation mit dem zweiten Benutzer über einen Kurznachrichtendienst, SMS,-Kanal;
(ii) als Reaktion auf das Bestimmen, dass ein aktueller Standort des zweiten Benutzers sich außerhalb eines zellularen Heimnetzwerks befindet, und auf das Bestimmen, dass eine Vorrichtung des zweiten Benutzers in einem Lautlos-Modus arbeitet, Präsentieren, dem ersten Benutzer, der Benutzeroberfläche zum Einleiten der Kommunikation mit dem zweiten Benutzer über eine am meisten verwendete IP-basierte Messaging-Anwendung;
(iii) als Reaktion auf das Bestimmen, dass der zweite Benutzer fährt, und auf das Bestimmen, dass eine Vorrichtung des Zielkontakts nicht Bluetooth-fähig ist, Senden einer Erinnerung an den ersten Benutzer zum Kontaktieren des zweiten Benutzers zu einer späteren Zeit; oder
(iv) als Reaktion auf das Bestimmen, dass eine aktuelle Zeit an einem Standort einer Vorrichtung des zweiten Benutzers innerhalb eines gewissen Bereichs, der für die Echtzeitkommunikation nicht geeignet ist, liegt, Präsentieren, dem ersten Benutzer, der Benutzeroberfläche zum Einleiten der Kommunikation mit dem zweiten Benutzer über eine IP-basierte Messaging-Anwendung oder SMS-Anwendung.

2. System nach Anspruch 1, wobei der Kanal mindestens eines beinhaltet von: einer oder mehreren Vorrichtungen, einer oder mehreren Verbindungen, einem oder mehreren Protokollen oder einer oder mehreren Anwendungen.

3. System nach Anspruch 1, wobei die Kanalinformationen mindestens eines betreffen von: einer oder mehreren Vorrichtungen, einer Art von Verbindung, die mit einer oder mehreren Vorrichtungen verknüpft ist, einem oder mehreren Protokollen, die mit einer oder mehreren Verbindungen verknüpft sind, oder einer Installation von einer oder mehreren Anwendungen.

4. System nach Anspruch 1, wobei jedes der Kommunikationsprofile historische Verwendungsinformationen beinhaltet.

5. System nach Anspruch 4, wobei die historischen Verwendungsinformationen mindestens eines betreffen von: einer Frequenz, mit der ein oder mehrere Kanäle verwendet werden, einem Standort, an dem ein oder mehrere Kanäle verwendet werden, einem oder mehreren Kanälen, die zuletzt verwendet wurden, oder Kosten, die mit einem Verwenden eines oder mehrerer Kanäle verknüpft sind.

6. System nach Anspruch 1, wobei jedes der Kommunikationsprofile eine Vielzahl von Kontakten beinhaltet.

7. System nach Anspruch 1, wobei das System zum Verhindern, dass die Kommunikationsprofile zwischen verschiedenen Benutzern geteilt werden, konfiguriert ist.

8. System nach Anspruch 1, wobei der eine oder die mehreren Prozessoren die Anweisungen ausführen, um einen oder mehrere empfohlene Kontakte, die dem ersten Benutzer zu präsentieren sind, bevor die Hinweismeldung empfangen wird, zu bestimmen.

9. System nach Anspruch 8, wobei jeder des einen oder der mehreren empfohlenen Kontakte einen oder mehrere empfohlene Kanäle beinhaltet.

10. System nach Anspruch 8, wobei mindestens ein Aspekt des einen oder der mehreren empfohlenen Kontakte basierend auf mindestens einem Abschnitt eines oder mehrerer der Kommunikationsprofile bestimmt wird.

11. System nach Anspruch 1, wobei das System derart konfiguriert ist, dass die Auswahl des mindestens einen Kanals durch stärkeres Gewichten mindestens eines von dem zweiten Kommunikationsprofil oder dem zweiten aktuellen Kontext in Bezug auf mindestens eines von dem ersten Kommunikationsprofil oder dem ersten aktuellen Kontext beeinflusst wird.

12. Computerimplementiertes Verfahren (200), umfassend:
Aufbewahren (202) einer Vielzahl von Kommunikationsprofilen, die ein erstes Kommunikationsprofil, das mit einem ersten Benutzer verknüpft ist, und ein zweites Kommunikationsprofil, das mit einem zweiten Benutzer verknüpft ist, beinhaltet, wobei jedes der Kommunikationsprofile Kanalinformationen, die mit einer Vielzahl von Kanälen für die Kommunikation zwischen dem ersten Benutzer und dem zweiten Benutzer verknüpft sind, beinhaltet;
Empfangen (204) einer Hinweismeldung, um mit dem zweiten Benutzer zu kommunizieren, von dem ersten Benutzer;
Bestimmen (206) eines ersten aktuellen Kontexts des ersten Benutzers und eines zweiten aktuellen Kontexts des zweiten Benutzers im Wesentlichen, wenn die Hinweismeldung empfangen wird, wobei mindestens einer von dem ersten aktuellen Kontext oder dem zweiten aktuellen Kontext mindestens eines betrifft von: einer Konnektivität einer oder mehrerer Vorrichtungen, einen Bildschirmzustand einer oder mehrerer Vorrichtungen, einem Audioprofil, einer aktuellen Verwendung von Audio oder Video, einem Standort einer oder mehrerer Vorrichtungen, einer aktuellen Zeit, an der sich eine oder mehrere Vorrichtungen aufhalten, oder einer Art oder einem Inhalt einer zu kommunizierenden Nachricht;
Auswählen (208) mindestens eines der Kanäle unter Nutzung von mindestens einem von: dem ersten Kommunikationsprofil, dem zweiten Kommunikationsprofil, dem ersten aktuellen Kontext oder dem zweiten aktuellen Kontext, wobei die Auswahl zugunsten des zweiten Kommunikationsprofils und/oder des zweiten aktuellen Kontexts, die mit dem zweiten Benutzer verknüpft sind, in Bezug auf das erste Kommunikationsprofil und/oder den ersten aktuellen Kontext, die mit dem ersten Benutzer verknüpft sind, beeinflusst ist; und
Präsentieren (210), dem ersten Benutzer, einer Benutzeroberfläche zum Einleiten der Kommunikation mit dem zweiten Benutzer über den ausgewählten mindestens einen Kanal unter Nutzung von mindestens einem von:
(i) als Reaktion auf das Bestimmen, dass eine Verbindung zwischen dem ersten Benutzer und dem zweiten Benutzer nicht verfügbar ist, oder die Verbindung von unzureichender Qualität ist, um einen Sprachanruf oder eine beliebige Echtzeitkommunikation zu unterstützen, und auf das Bestimmen, dass eine Vorrichtung des zweiten Benutzers in einem Lautlos-Modus arbeitet, Präsentieren (408), dem ersten Benutzer, der Benutzeroberfläche zum Einleiten der Kommunikation mit dem zweiten Benutzer über einen Kurznachrichtendienst, SMS,-Kanal;
(ii) als Reaktion auf das Bestimmen, dass ein aktueller Standort des zweiten Benutzers sich außerhalb eines zellularen Heimnetzwerks befindet, und auf das Bestimmen, dass eine Vorrichtung des zweiten Benutzers in einem Lautlos-Modus arbeitet, Präsentieren (418), dem ersten Benutzer, der Benutzeroberfläche zum Einleiten der Kommunikation mit dem zweiten Benutzer über eine am meisten verwendete IP-basierte Messaging-Anwendung;
(iii) als Reaktion auf das Bestimmen, dass der zweite Benutzer fährt, und auf das Bestimmen, dass eine Vorrichtung des Zielkontakts Bluetooth-fähig ist, Senden (426) einer Erinnerung an den ersten Benutzer zum Kontaktieren des zweiten Benutzers zu einer späteren Zeit; oder
(iv) als Reaktion auf das Bestimmen, dass eine aktuelle Zeit an einem Standort der Vorrichtung des zweiten Benutzers innerhalb eines gewissen Bereichs, der für die Echtzeitkommunikation nicht geeignet ist, liegt, Präsentieren (430), dem ersten Benutzer, der Benutzeroberfläche zum Einleiten der Kommunikation mit dem zweiten Benutzer über eine IP-basierte Messaging-Anwendung oder SMS-Anwendung.

13. Verfahren nach Anspruch 12, wobei der Kanal mindestens eines beinhaltet von: einer oder mehreren Vorrichtungen, einer oder mehreren Verbindungen, einem oder mehreren Protokollen oder einer oder mehreren Anwendungen.

14. Computerprogrammprodukt, umfassend computerausführbare Anweisungen, die auf einem nicht flüchtigen computerlesbaren Medium aufbewahrt werden, die, wenn sie durch einen Prozessor ausgeführt werden, den Prozessor anweisen, das Verfahren nach Anspruch 12 oder 13 durchzuführen.

## Revendications

1. Système (100), comprenant :
une mémoire non transitoire (102) comprenant des instructions et une pluralité de profils de communication comportant un premier profil de communication (104) associé à un premier utilisateur (110) et un second profil de communication (106) associé à un second utilisateur (112), chacun des profils de communication comportant des informations de canal associées à une pluralité de canaux pour la communication entre le premier utilisateur et le second utilisateur ; et
un ou plusieurs processeurs (108) en communication avec la mémoire, le ou les processeurs exécutant les instructions pour :
recevoir une indication (114) pour communiquer avec le second utilisateur à partir du premier utilisateur ;
déterminer un premier contexte actuel (115) du premier utilisateur et un second contexte actuel (116) du second utilisateur sensiblement lorsque l'indication est reçue, le premier contexte actuel et/ou le second contexte actuel se rapportant à : une connectivité d'un ou plusieurs dispositifs et/ou un état d'écran d'un ou plusieurs dispositifs et/ou un profil audio et/ou une utilisation actuelle de l'audio ou de la vidéo et/ou un emplacement d'un ou plusieurs dispositifs et/ou une heure actuelle où résident un ou plusieurs dispositifs et/ou un type ou contenu d'un message à communiquer ;
sélectionner au moins l'un des canaux utilisant : le premier profil de communication et/ou le second profil de communication et/ou le premier contexte actuel et/ou le second contexte actuel, la sélection étant biaisée en faveur du second profil de communication et/ou du second contexte actuel associé au second utilisateur, par rapport au premier profil de communication et/ou au premier contexte actuel associé au premier utilisateur ; et
présenter une interface utilisateur au premier utilisateur pour initier une communication avec le second utilisateur par l'intermédiaire de l'au moins un canal sélectionné en utilisant :
(i) en réponse à la détermination qu'une connexion entre le premier utilisateur et le second utilisateur est indisponible ou que la connexion est de qualité insuffisante pour prendre en charge un appel vocal ou toute communication en temps réel et à la détermination qu'un dispositif du second utilisateur fonctionne dans un mode silencieux, la présentation de l'interface utilisateur au premier utilisateur pour initier une communication avec le second utilisateur par l'intermédiaire d'un canal de service de messages courts, SMS ; et/ou
(ii) en réponse à la détermination qu'un emplacement actuel du second utilisateur se trouve à l'extérieur d'un réseau cellulaire domestique, et à la détermination qu'un dispositif du second utilisateur fonctionne en mode silencieux, la présentation de l'interface utilisateur au premier utilisateur pour initier la communication avec le second l'utilisateur par l'intermédiaire de l'application de messagerie IP la plus utilisée ; et/ou
(iii) en réponse à la détermination que le second utilisateur conduit, et à la détermination qu'un dispositif du contact cible n'est pas activé par Bluetooth, l'envoi d'un rappel au premier utilisateur pour qu'il contacte le second utilisateur à un moment ultérieur ; et/ou
(iv) en réponse à la détermination qu'une heure actuelle à un emplacement d'un dispositif du second utilisateur se situe dans une certaine plage qui ne convient pas à une communication en temps réel, la présentation de l'interface utilisateur au premier utilisateur pour initier la communication avec le second utilisateur par l'intermédiaire d'une application de messagerie IP ou d'une application SMS.

2. Système selon la revendication 1, dans lequel le canal comporte : un ou plusieurs dispositifs et/ou une ou plusieurs connexions et/ou un ou plusieurs protocoles et/ou une ou plusieurs applications.

3. Système selon la revendication 1, dans lequel les informations de canal concernent : un ou plusieurs dispositifs et/ou un type de connexion associé à un ou plusieurs dispositifs et/ou un ou plusieurs protocoles associés à une ou plusieurs connexions et/ou une installation d'une ou de plusieurs applications.

4. Système selon la revendication 1, dans lequel chacun des profils de communication comporte des informations d'utilisation historiques.

5. Système selon la revendication 4, dans lequel les informations d'utilisation historiques se rapportent à : une fréquence à laquelle un ou plusieurs canaux sont utilisés et/ou un emplacement auquel un ou plusieurs canaux sont utilisés et/ou un ou plusieurs canaux qui ont été utilisés pour la dernière fois et/ou un coût associé à l'utilisation d'un ou de plusieurs canaux.

6. Système selon la revendication 1, dans lequel chacun des profils de communication comporte une pluralité de contacts.

7. Système selon la revendication 1, dans lequel le système est configuré pour empêcher les profils de communication d'être partagés entre différents utilisateurs.

8. Système selon la revendication 1, dans lequel le ou les processeurs exécutent les instructions pour déterminer un ou plusieurs contacts recommandés à présenter au premier utilisateur, avant la réception de l'indication.

9. Système selon la revendication 8, dans lequel chacun du ou des contacts recommandés comporte un ou plusieurs canaux recommandés.

10. Système selon la revendication 8, dans lequel au moins un aspect du ou des contacts recommandés est déterminé sur la base d'au moins une partie d'un ou de plusieurs des profils de communication.

11. Système selon la revendication 1, dans lequel le système est configuré de telle sorte que la sélection de l'au moins un canal est biaisée en pondérant davantage au moins l'un du second profil de communication ou du second contexte actuel, par rapport au premier profil de communication et/ou au premier contexte actuel.

12. Procédé mis en oeuvre par ordinateur (200), comprenant :
le stockage (202) d'une pluralité de profils de communication comportant un premier profil de communication associé à un premier utilisateur et un second profil de communication associé à un second utilisateur, chacun des profils de communication comportant des informations de canal associées à une pluralité de canaux pour la communication entre le premier utilisateur et le second utilisateur ;
la réception (204) d'une indication de communication avec le second utilisateur provenant du premier utilisateur ;
la détermination (206) d'un premier contexte actuel du premier utilisateur et d'un second contexte actuel du second utilisateur sensiblement lorsque l'indication est reçue, le premier contexte actuel et/ou le second contexte actuel se rapporte à : une connectivité d'un ou plusieurs dispositifs et/ou un état d'écran d'un ou plusieurs dispositifs et/ou un profil audio et/ou une utilisation actuelle de l'audio ou de la vidéo et/ou un emplacement d'un ou plusieurs dispositifs et/ou une heure actuelle où résident un ou plusieurs dispositifs et/ou un type ou le contenu d'un message à communiquer ;
la sélection (208) d'au moins l'un des canaux utilisant : le premier profil de communication et/ou le second profil de communication et/ou le premier contexte actuel et/ou le second contexte actuel, la sélection étant biaisée en faveur du second profil de communication et/ou du second contexte actuel associé au second utilisateur, en relation avec le premier profil de communication et/ou le premier contexte actuel associé au premier utilisateur ; et
la présentation (210) d'une interface utilisateur au premier utilisateur pour initier une communication avec le second utilisateur par l'intermédiaire de l'au moins un canal sélectionné utilisant :
(i) en réponse à la détermination qu'une connexion entre le premier utilisateur et le second utilisateur est indisponible ou que la connexion est de qualité insuffisante pour prendre en charge un appel vocal ou toute communication en temps réel, et à la détermination qu'un dispositif du second utilisateur fonctionne dans un mode silencieux, la présentation (408) de l'interface utilisateur au premier utilisateur pour initier une communication avec le second utilisateur par l'intermédiaire d'un canal de service de messages courts, SMS ; et/ou
(ii) en réponse à la détermination qu'un emplacement actuel du second utilisateur se trouve en dehors d'un réseau cellulaire domestique, et à la détermination qu'un dispositif du second utilisateur fonctionne en mode silencieux, la présentation (418) de l'interface utilisateur au premier utilisateur pour initier la communication avec le second utilisateur par l'intermédiaire d'une application de messagerie IP la plus utilisée ; et/ou
(iii) en réponse à la détermination que le second utilisateur conduit, et à la détermination qu'un dispositif du contact cible est activé par Bluetooth, l'envoi (426) d'un rappel au premier utilisateur pour qu'il contacte le second utilisateur à un moment ultérieur ; et/ou
(iv) en réponse à la détermination qu'une heure actuelle à un emplacement du dispositif du second utilisateur se situe dans une certaine plage qui ne convient pas pour une communication en temps réel, la présentation (430) de l'interface utilisateur au premier utilisateur pour initier la communication avec le second utilisateur par l'intermédiaire d'une application de messagerie IP ou d'une application SMS.

13. Procédé selon la revendication 12, dans lequel le canal comporte : un ou plusieurs dispositifs et/ou une ou plusieurs connexions et/ou un ou plusieurs protocoles et/ou une ou plusieurs applications.

14. Produit-programme informatique comprenant des instructions exécutables par ordinateur stockées sur un support lisible par ordinateur non transitoire qui, lorsqu'elles sont exécutées par un processeur, ordonnent au processeur d'effectuer le procédé selon la revendication 12 ou 13.
